Europäisches Patentamt

European Patent Office

Office européen des brevets

(11) Publication number: **0 008 739**
B1

# EUROPEAN PATENT SPECIFICATION

(45) Date of publication of patent specification: **15.12.82**

(51) Int. Cl.³: **G 03 F 1/00**

(21) Application number: **79103064.6**

(22) Date of filing: **21.08.79**

(54) **Reprographic apparatus capable of reproducing various tone and line originals and methods of operation thereof.**

(30) Priority: **05.09.78 US 939542**

(43) Date of publication of application:
**19.03.80 Bulletin 80/6**

(45) Publication of the grant of the patent:
**15.12.82 Bulletin 82/50**

(84) Designated Contracting States:
**DE FR GB IT**

(56) References cited:
**US - A - 2 255 408**
**US - A - 3 996 421**

**1977 SID INTERNATIONAL SYMPOSIUM,**
**"Digest of technical papers", 1977, Society for**
**information display, Los Angeles, US**
**K. Y. WONG et al "Adaptive switching of**
**dispersed and clustered halftone patterns for Bi-**
**level image rendition", pages 124—125.**

(73) Proprietor: **International Business Machines Corporation**
**Armonk, N.Y. 10504 (US)**

(72) Inventor: **Janeway III, Donald Lee**
**501 Ash Street**
**Broomfield Colorado 80020 (US)**

(74) Representative: **Lewis, Alan John**
**IBM United Kingdom Patent Operations Hursley Park**
**Winchester, Hants, SO21 2JN (GB)**

Courier Press, Leamington Spa, England.

# 0 008 739

Reprographic apparatus capable of reproducing various tone and line originals and methods of operation thereof

The invention relates to reprographic apparatus capable of reproducing various tone (e.g. continuous tone, half-tone) and line originals, and to methods of operation thereof.

Devices and methods for copying of documents are well known in the prior art. Included in such prior art are devices and methods for enhancing the optical recognition of characters in documents being copied, and such character recognition devices have commonly included threshold circuitry. Such devices and methods are shown, for example, in U.S. Patent Nos. 3,479,642, 3,534,334 and 3,737,855.

U.S. Patent Nos. 3,294,896, 3,622,698 and 3,723,649 comprise isolated publications of facsimile systems in which switching between different modes is possible.

In connection with facsimile systems, it has also been heretofore suggested that switching can be accomplished between two conditions depending upon whether the portions of a particular document then being copied consists of half-tones or black-and-white matter. A two condition thresholding arrangement is shown, for example, in U.S. Patent No. 2,255,408, with circuitry being disclosed for switching between line copy and continuous tone detection algorithms based upon the rate of change of reflectance from the portion of the document then being copied.

The Digest of Technical Papers presented at the Society for Information Display's International Symposium at Los Angeles, U.S.A. in 1977 includes at pages 124, 125 a digest entitled "Adaptive Switching of Dispersed and Clustered Halftone Patterns for Bi-level Image Rendition" of a paper presented by K Y Wong and P Stucki.

The paper describes an adaptive switching approach to increase the quality of reproduction whenever text and photographs are intermixed on the same original document. The document is scanned and the output f (x, y) converted into a serial string of digital data q(x; y), each item of data having a value corresponding to the reflectance of an elemental area of the document. In order to determine whether a fast or slow transition occurs at a given location (x, y) a data string corresponding to the reflectance at the location and the eight neighbouring elemental areas is used to calculate the reflectance gradient Grad [q(x, y)]. A comparison is then made to determine when Grad [q(x, y)] is greater than > or equal or less than < E, where E is a predetermined switching threshold value. When the gradient is greater than E a faster transition has been detected and the appropriate dispersed half tone mode would be adopted, and where the gradient is less than or equal to E a slow transition has been detected and the appropriate clustered half tone mode would be adopted. Setting of the mode is thus dependant on a single preset value E.

The applicants have discovered that improved reproduction of mixed tone originals can be obtained by comparing the gradients or rate-of-change signals with two constant preset values and selecting the mode according to the result of the comparison. This provides the substantial advantage that the comparison not only indicates whether a first or a second operational mode should be established but also indicates whether no change of mode should occur.

An object of the invention is therefore to provide an improved method of reproducing originals having different natures or formats such as continuous tone, half-tone, grey-level coded, line or printed or having mixed natures or formats such as half-tone pictures and printed matter, and to provide improved reprographic apparatus capable of carrying out the improved method.

Accordingly the invention provides a method for establishing an optimum operational mode for printing copies of different or mixed natured or format documents by selection of a thresholding algorithm, from a plurality of algorithms, most suitable for each scanned portion of the document, said method comprising scanning a document and producing a multiplicity of pel signals indicative of the reflectance of a multiplicity of different segments of the scanned document and developing for each segment an output signal dependant on the rate of change of reflectance of the document at that segment, said method being characterised by comparing the value of the rate-of-change signal with two different predetermined values, one greater than the other, to determine whether the signal value is less than the lower predetermined value, in the range between the two predetermined values, or greater than the higher predetermined value, and utilizing said determination to select the most suitable thresholding algorithm to be utilized to print copies of the portion of the document then being scanned if the signal value is greater than the lower predetermined value or, if the signal value is less than the lower predetermined value, to maintain the current thresholding algorithms unchanged.

The invention also provides reprographic apparatus for reproducing an original represented by a serial string of digital data, each item of data having a value corresponding to a surface characteristic (e.g. reflectance) of the elemental area of the original represented by the item of data, said apparatus being capable of operating in more than one mode to produce copies of different or mixed nature (e.g. continuous tone, half-tone, grey-level, line or printed) originals or portions thereof and comprising a circuit for analysing segments of the data string to produce a signal dependant on the rate of change of the surface characteristic over the portion of the original represented by the data segment, said apparatus being characterised by comprising a comparison circuit for comparing the rate-of-change dependant signal with first and second reference signals corresponding respectively to a low value $K_1$

for the rate-of-change dependant signals below which no change of operating mode is required and to a higher value $K_2$ above which operation in a first operating mode is required, a second operating mode being required for values of the rate-of-change dependant signal between the low and higher values, and control circuitry, responsive to the output of the comparison circuit, for providing control signals to control the mode of operation of the apparatus.

The invention will now be more particularly described with reference to the accompanying drawings, in which:—

Figure 1 is a block diagram illustrating data flow for copying mixed format documents in reprographic apparatus embodying the invention.

Figure 2 is a block diagram illustrating a particular embodiment which can be incorporated in the apparatus of Figure 1.

Figure 3 is a block diagram illustrating an alternate embodiment which can be incorporated in the apparatus of Figure 1.

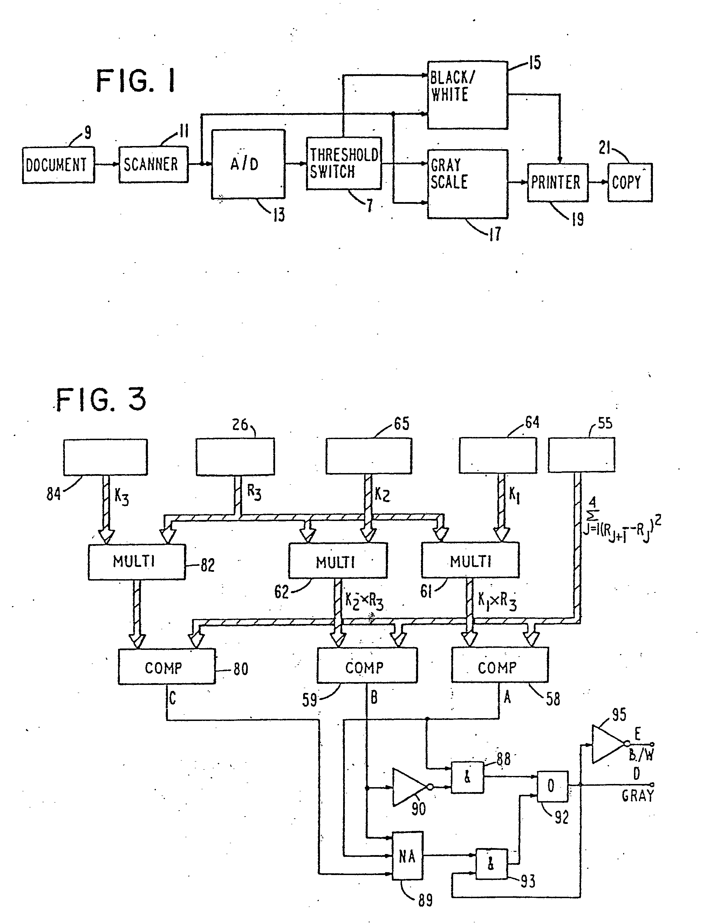

The thresholding mode switch 7 shown in Figure 1 is included in a data flow chart (such as that of a facsimile-copier) to illustrate use of the switch to determine and control the mode for printing of copies of mixed format documents.

As indicated in Figure 1, a mixed format document 9 is scanned by scanner 11. Document 9 may, for example, include portions having continuous tone, gray-scale, and line copy.

With respect to such documents, while much effort has heretofore been expended to optimize a gray-scale algorithm to achieve high quality copying of continuous tone, previously gray scaled, and line copy documents, an algorithm achieving quality copying of any one format has heretofore resulted in a poor copy of the other two formats. This is due, at least in part, to the difference in the rate of change of reflectance of continuous tone as compared to line copy. Line copy has sharp gradients of reflectance due to the characters being normally either dark or light, while continuous tones usually transition more slowly from darker to light regions and vice versa and hence have a much lower rate of change of reflectance than does line copy.

Scanner 11 is preferably a conventional image disecting scanning device capable of individually scanning each picture element, or pel, and provides an analog electrical signal output that is converted at conventional analog-to-digital converter 13 to a digital output signal that is indicative of each pel processed by scanner 11.

As also indicated in Figure 1, the digital output signal from analog-to-digital converter 13 is coupled to thresholding mode switch 7, the outputs of which control black-white thresholding algorithm circuitry 15 and gray-scale thresholding algorithm circuitry 17 which determine the mode of copying of information copied from scanner 11 carried out for each pel at printer 19 to make copy 21.

Black-white thresholding algorithm circuitry 15 and gray-scale thresholding circuitry 17 may be conventional and may be, for example, circuitry such as shown in U.S. Patent Nos. 3,159,815 and 3,830,967. Such circuitry is not involved in this invention, however, except to the extent that the thresholding mode switch of this invention controls the mode of copying carried out by printer 19, which printer may also be conventional.

Mode switch 7 utilizes an algorithm that instantaneously recognizes sharp gradients and treats them differently than areas having more gentle transitions. In accomplishing this end, the individual reflectance differences between adjacent picture elements, or pels, as determined by image-disecting scanning device 11, are determined and the absolute value of these differences is summed over a predetermined number of pels. This sum is then normalized by dividing by the reflectance of the pel then being thresholded. The normalization may be modified by using some function of the pel or a combination of pels as the divisor. The result of this calculation is a constant, referred to hereinafter as the gradient constant, which indicates the rate of change of reflectance with linear displacement of the scanning point, or pel position. By averaging over a number of pels, noise sensitivity is reduced.

If the established gradient constant is large, this indicates that the rate of reflectance change is high, requiring that a black-white thresholding algorithm be used for achieving the best possible, or optimum, copy. If, on the other hand, the gradient constant is very small, this indicates that the area being scanned is essentially of constant reflectance and the thresholding mode being used previously to encounter this small constant is continued. If the gradient constant has an intermediate value, this indicates that slow changes in reflectance are occurring and a suitable gray-scale thresholding algorithm is appropriate for achieving the best possible, or optimum, copy.

Expressed mathematically, the switching algorithm is:

$$F_i = \sum_{j=i-a}^{j=i+b} (R_{j+i} - R_j) \cdot \frac{1}{R_i}$$

where

$F_i$ = gradient constant for the ith pel, i.e., the pel being thresholded;

$R_i$, $R_j + 1$ and $R_j$ = reflectance of the i, $j+1$, and j pels, respectively; and

3

a and b=arbitrary constants determined by the optimization of the algorithm to the particular application (the integer constants a and b are normally expected to range between minus two to plus five. The size and position of the window is for the gradient b> (—a), a being the number of pels behind i and b being the number of pels ahead of i.

If:

$F_i > K_2$, then the thresholding mode is changed to the black-white thresholding algorithm;

$K_1 \leqslant F_i \leqslant K_2$, then the thresholding mode is changed to the gray-scale thresholding algorithm; or

$F_i < K_1$, then no change is made in the thresholding mode

where $K_1$ and $K_2$ are arbitrary constants determined by optimization of the algorithm to the particular application.

The constant $K_1$ is chosen high enough to prevent gray-scaling of the background of the text, while the constant $K_2$ is chosen low enough to respond to sharp transitions in non-text but high enough to soften contrasts. If $K_1$ is increased from optimum, there is quicker recognition of changes in format and an increased likelihood of not recognizing slow changes in continuous formats so as to remain in black-white too long. If $K_1$ is decreased away from optimum, there is an increased probability of applying a low density gray-scaling algorithm to backgrounds of text. If $K_2$ is increased away from optimum, there will be fuzziness in the copies of characters and gray-scaling of coarser halftone screens. If $K_2$ is decreased away from optimum, the contrast increases in continuous tones and fine screen halftones.

Variations of the above expressed algorithm may include the extension to two dimensions to evaluate the gradient constant, and the use of density rather than reflectance to calculate the constant. Density is not directly available from most scanning devices, but if available can be used by applying the definition of density to the equation. Where utilized the density relationship is

$$D = \log \frac{1}{R} \text{ or } R = 10^{-D}.$$

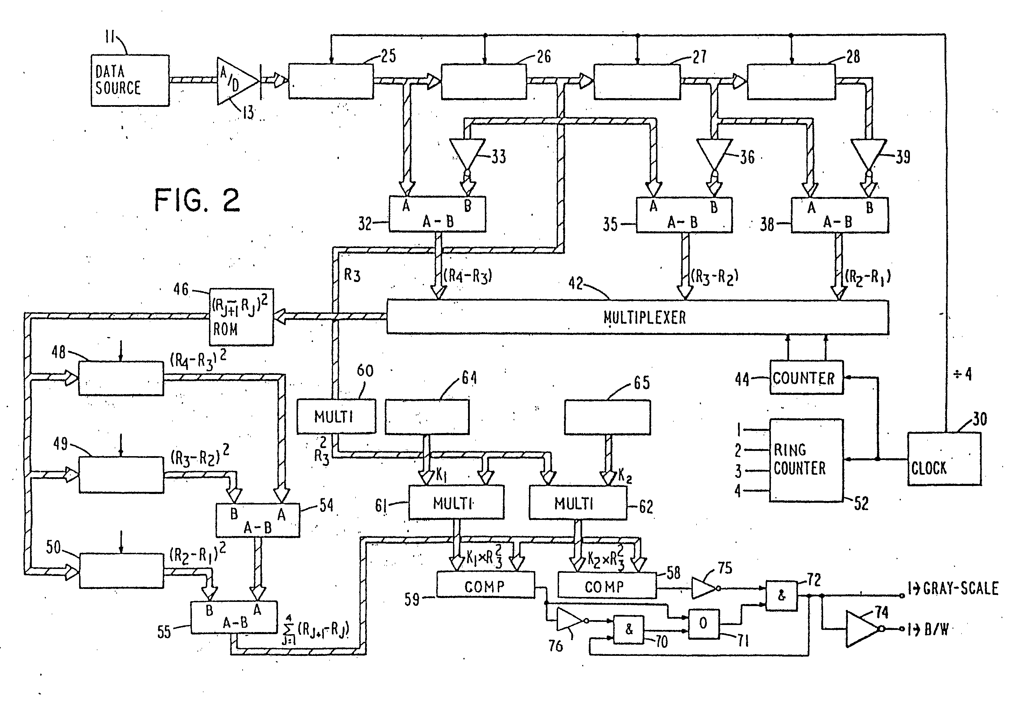

A specific implementation of thresholding mode switch circuit 7 is illustrated in Figure 2, where the circuit operates according to the following general algorithm but with the arbitrary selection of $a$ and $b$ having been made as one and two, respectively. In other words, in the actual example as shown in Figure 2, there are two pels ahead of i and one pel behind i.

$$F_i = \sum_{j=i-a}^{j=i+b} (R_{j+1} - R_j)^2 \cdot \frac{1}{R_i^2}$$

As shown in Figure 2, the analog data coupled from scanner 11 and converted to digital form in analog-to-digital converter 13, is coupled to four bit registers 25, 26, 27 and 28, which registers also receive an input from master clock 30 (divided by four). Four consecutive data bytes ($R_1$, $R_2$, $R_3$ and $R_4$) are loaded into the registers 25—28 from converter 13. Each byte is cascaded through the registers as each new data byte is shifted into the circuit.

As shown in Figure 2, register 25 is directly connected with adder 32, register 26 is connected with adder 32 through inverter 33 and is directly connected with adder 35, register 27 is connected with adder 35 through inverter 36 and is directly connected with adder 38, and register 28 is connected with adder 38 through inverter 39. As shown, the data ($R_1$, $R_2$, $R_3$ and $R_4$ in registers 28, 27, 26 and 25, respectively) is transferred to the adders where the quantities $R_{j+1} - R_j$ are calculated.

Adders 32, 35, and 38 are connected with multiplexer 42 which receives the difference outputs $R_2 - R_1$, $R_3 - R_2$, and $R_4 - R_3$ from the adders, 38, 35, and 32, respectively. Multiplexer 42 (which is connected with counter 44, which counter is also connected with master clock 30) provides an output to read only memory (ROM) 46 so that the quantities calculated at the adder are channeled through ROM 46. ROM 46 returns the square of the difference $(R_{j+1} - R_j)^2$ using a table-look-up scheme. This scheme is one in which the input to the ROMs is an address corresponding to a particular value stored in the ROM, i.e., if the input is a 6 (i.e., storage position 6) the output from ROM 46 would be the value 36 or $6^2$. This scheme is faster in this case than the circuitry required for calculation of squares. These squared differences are then transferred to registers 48, 49 and 50, each of which registers is connected with ring counter 52, and then summed in adders 54 and 55 with the sum

$$\sum_{j=1}^{4} (R_{j+1} - R_j)^2$$

being carried to digital comparators 58 and 59, (i=3, i—a=3—2=1, and i+b=3+1=4 for the specific embodiment shown in Figure 2). As shown, the outputs of register 48 $(R_4—R_3)^2$ and register 49 $(R_3—$

...

**0 008 739**

$R_2)^2$ are coupled to adder 54 while the result thereof and the output of register 50 $(R_2-R_1)^2$ are coupled to adder 55.

The second input to comparators 58 and 59 is coupled thereto from multipliers 61 and 62 with multiplier 61 receiving a $K_1$ input from register 64 and multiplier 62 receiving a $K_2$ input from register 65. The $R_3$ input is coupled from register 26 through squarer or multiplier 60 to provide input $R_3^2$ to the multipliers 61, 62. The values $K_1 \times R_3^2$ and $K_2 \times R_3^2$ are calculated in the multipliers 61 and 62, respectively, and coupled to comparators 59 and 58, respectively.

The logic states of the outputs of comparators 58 and 59 establish the three decision states according to the following table:

| Condition | State no. | Comparator output level | |
|---|---|---|---|
| | | 58 | 59 |
| $$\frac{\sum\limits_{j=1}^{4}(R_{j+1}-R_j)^2}{R_3^2} < K_1$$ | 1 | 0 | 0 |
| $$K_1 < \frac{\sum\limits_{j=1}^{4}(R_{j+1}-R_j)^2}{R_3^2} < K_2$$ | 2 | 0 | 1 |
| $$\frac{\sum\limits_{j=1}^{4}(R_{j+1}-R_j)^2}{R_3^2} > K_2$$ | 3 | 1 | 1 |

These logic states are interpreted into switching signals for the black-white and gray-scale thresholding circuitry by logic gates 70, 71 and 72 (gates 70 and 72 being AND gates and gate 71 being an OR gate), and by the inverters 75 and 76.

State 1 results in the output of AND gate 72 remaining at its previous level and thereby maintaining the previous threshold mode. State 2 results in the output of AND gate 72 being 1 thereby employing gray-scale thresholding. State 3 results in AND gate 72 being 0 thereby employing black-white thresholding, the output being coupled through inverter 74.

Although the AND gate 72 provides a binary output, the logic diagram of Figure 2 represents three states. Referring to the above table, State No. 1 results in no change in the output from AND gate 72. State 2 results in the Grey Scale (GS) threshold being turned on and the Black/White (B/W) threshold being turned off. State 3 is the opposite of state 2. Accordingly entering state 2 or state 3 will force a threshold condition, while entering state 1 from either state 2 or 3 will leave the threshold condition unchanged.

An alternate embodiment of thresholding mode switch of this invention is shown in Figure 3 to include three comparators 58, 59, and 80. As shown, comparators 58 and 59 receive inputs from adder 55 and multipliers 61 and 62 in the same manner as described in connection with the Figure 2 embodiment. In this embodiment (Figure 3), comparator 80 receives inputs from adder 55 and multiplier 82. Multiplier 82 receives an input $(R_3)$ from register 26 and a $K_3$ input from register 84. $K_3$ is a constant to add a hysteresis effect.

The outputs from comparators 58, 59, and 80 are as follows:

$$A \longleftrightarrow \sum_{j=1}^{4}(R_{j+1}-R_j)^2 < K_1 \times R_3^2$$

$$B \longleftrightarrow \sum_{j=1}^{4}(R_{j+1}-R_j)^2 < K_2 \times R_3^2$$

$$C \longleftrightarrow \sum_{j=1}^{4}(R_{j+1}-R_j)^2 < K_3 \times R_3^2$$

The output from comparator 58 (designated A) is coupled to AND gate 88 and NAND gate 89, the

5

output from comparator 59 (designated B) is coupled to AND gate 88 (through inverter 90) and to NAND gate 89, and the output from comparator 80 (designated C) is coupled to NAND gate 89. The output from AND gate 88 is coupled to OR gate 92, while the output of NAND gate 89 is coupled to OR gate 92 through AND gate 93 (which receives a second input from OR gate 92).

The output from OR gate 92 is coupled to the gray-scale thresholding circuitry and the black-white thresholding circuitry to control operation thereof with the output designated D controlling gray-scale thresholding and the output designated E being coupled through inverter 95 to control black-white thresholding according to the following:

D gray-scale ON
when $D=AB+(\overline{ABC})\,D$

E black-white ON
when $E=\overline{D}$

It will be appreciated from the foregoing that the invention provides inter alia an improved thresholding mode switch and method for mode selection that are useful in achieving high quality printed copies of mixed format documents. The improved thresholding mode switch and method for mode selection has a three decision thresholding determining capability without requiring the use of hysteresis, with gradient constants being established for use in determining the threshold mode to be utilized for each picture element to be copied. A gradient constant is established for each pel of the document being copied and the value of the gradient constant, with respect to three established ranges, determines the thresholding algorithm used for controlling printing of that portion of copies relating to that particular pel. The improved thresholding mode switch is for use in making printed copies of mixed format documents and by having a three decision thresholding determining capability enables high quality prints of mixed format documents to be made.

**Claims**

1. Reprographic apparatus for reproducing an original represented by a serial string of digital data, each item of data having a value corresponding to a surface characteristic (e.g. reflectance) of the elemental area of the original represented by the item of data, said apparatus being capable of operating in more than one mode to produce copies of different or mixed nature (e.g. continuous tone, half-tone, grey-level, line or printed) originals or portions thereof and comprising a circuit (11) for analysing segments of the data string to produce a signal dependant on the rate of change of the surface characteristic over the portion of the original represented by the data segment said apparatus being characterised by comprising, a comparison circuitry (58, 59) for comparing the rate-of-change dependant signal with first and second reference signals corresponding respectively to a low value $K_1$ for the rate-of-change dependant signal below which no change of operating mode is required and to a higher value $K_2$ above which operation in a first operating mode is required, a second operating mode being required for values of the rate-of-change dependant signal between the low and higher values, and control circuitry, responsive to the output of the comparison circuit, for providing control signals to control the mode of operation of the apparatus.

2. Apparatus as claimed in claim 1, further characterised in that the analysing circuit provides a rate-of-change dependant signal $F_i$ according to the relationship

$$F_i = \sum_{j=i-a}^{j=i+b} (R_{j+1}-R_j) \cdot \frac{1}{R_i}$$

where $R_i$, $R_j$ and $R_{j+1}$ are the data items for the $i^{th}$, $j^{th}$ and $(j+1)^{th}$ elemental areas, and $a$ and $b$ are constants determining the number of data items preceding and following the $i^{th}$ data item in the data segment.

3. Apparatus as claimed in claim 1, further characterised in that the analysing circuit provides a rate-of-change dependant signal $F_i$ according to the relationship

$$F_i = \sum_{j=i-a}^{j=i+b} (R_{j+1}-R_j)^2 \cdot \frac{1}{R_i^2}$$

where $R_i$, $R_j$ and $R_{j+1}$ are the data items for the i, j, and j+1 elemental areas and $a$ and $b$ are constants determining the number of data items preceding and following the $i^{th}$ data item in the data segment.

4. Apparatus as claimed in claim 3, further characterised in that the analysing circuit comprises first means (32, 35, 38) for producing from each received segment of data, a sequence of difference values corresponding to the differences between consecutive pairs of data items in the segment

## 0 008 739

$(R_{j+1}-R_j)$; second means (46) for providing the square of each difference value $(R_{j+1}-R_j)^2$; third means (48, 49, 50) for summing the squared values $\Sigma(R_{j+1}-R_j)^2$; and fourth means (61, 62) for producing from the value $R_i$ of the $i^{th}$ data item of the segment of data and stored values $K_1$ and $K_2$, the product values $R_i^2 K_1$ and $R_i^2 K_2$.

5. Apparatus as claimed in claim 4, in which the comparison circuit comprises first means for comparing the product value $R_i^2 K_1$ and the sum of the squared values $(R_{j+1}-R_j)^2$ and providing a first binary output indicative of which is the greater; second means for comparing the product value $R_i^2 K_2$ and the sum of the squared values $\Sigma(R_{j+1}-R_j)^2$ and providing a second binary output indicative of which is the greater; and logical circuitry for logically combining the first and second binary output to provide an output signal indicative of the required operating mode.

6. Apparatus as claimed in claim 5, further characterised in that the control circuitry comprises means (70 to 76), responsive to the output of the logical circuitry, for determining both when a change of operating mode is required and when no change is required and for providing mode-change-signals to initiate a change of mode when a change of mode is required.

7. A method for establishing an optimum operation mode for printing copies of different or mixed natured or format documents by selection of a thresholding algorithm, from a plurality of algorithms, most suitable for each scanned portion of the document, said method comprising scanning a document and producing a multiplicity of pel signals indicative of the reflectance of a multiplicity of different segments of the scanned document and developing for each segment an output signal dependant on the rate of change of reflectance of the document at that segment, said method being characterised by comparing the value of the rate-of-change signal with two different predetermined values, one greater than the other, to determine whether the signal value is less than the lower predetermined value, in the range between the two predetermined values, or greater than the higher predetermined value, and utilizing said determination to select the most suitable thresholding algorithm to be utilized to print copies of the portion of the document then being scanned if the signal value is greater than the lower predetermined value or, if the signal value is less than the lower predetermined value, to maintain the current thresholding algorithm unchanged.

8. A method as claimed in claim 7, characterised in that a first thresholding algorithm is a black-white thresholding algorithm, and a second thresholding algorithm is a grey-scale thresholding algorithm.

### Revendications

1. Appareil reprographique pour reproduire un original représenté par une chaine de données numériques dont chacune possède une valeur correspondant à une caractéristique de surface (telle que la réflectance) de la zone élémentaire de l'original qui correspond à un élément de données, ledit appareil pouvant fonctionner dans plusieurs modes pour produire des copies de différents types (par exemple: tons soutenus, demi-tons, niveaux de gris, ligne ou impression) d'originaux ou de parties d'originaux et comprenant un circuit pour analyser des segments de ladite chaine afin de produire un signal qui est fonction de la vitesse de modification de la caractéristique de surface dans la partie de l'original représentée par le segment de données, ledit appareil étant caractérisé en ce qu'il comprend un circuit de comparaison (58, 59) pour comparer ledit signal avec des premier et second signaux de référence correspondant respectivement à une faible valeur $K_1$ dudit signal au-dessous de laquelle aucune modification du mode de fonctionnement n'est requise, et à une valeur plus élevée $K_2$ au-dessus de laquelle il est nécessaire d'opérer dans un premier mode de fonctionnement, un second mode de fonctionnement étant nécessaire pour les valeurs dudit signal qui sont comprises entre les valeurs $K_1$ et $K_2$, et un circuit de commande (15, 17) permettant, en réponse à la sortie fournie par le circuit de comparaison, d'engendrer des signaux de commande servant à commander le mode de fonctionnement de l'appareil.

2. Appareil selon la revendication 1, caractérisé en outre en ce que le circuit d'analyse fournit un signal $F_i$ qui est fonction de la vitesse de modification de la caractéristique de surface, selon la relation:

$$F_i = \sum_{j=i-a}^{j=i+b} (R_{j+1}-R_j) \cdot \frac{1}{R_i}$$

où $R_i$, $R_j$ et $R_{j+1}$ sont les données afférentes aux $i^{ème}$, $j^{ème}$ et $j_{+1}^{ème}$ zones élémentaires, et $a$ et $b$ sont des constantes qui déterminent le nombre de données précédents et suivant la $i^{ème}$ donnée dans le segment de données.

3. Appareil selon la revendication 1, caractérisé en outre en ce que le circuit d'analyse founit un signal $F_i$ qui est fonction de la vitesse de modification de la caractéristique de surface, conformément à la relation:

$$F_i = \sum_{j=i-a}^{j=i+b} (R_{j+1}-R_j)^2 \cdot \frac{1}{R_i^2}$$

7

où $R_i$, $R_j$ et $R_{j+1}$ sont les données afférentes aux zones élémentaires i, j et j+1 et où *a* et *b* sont des constantes déterminant le nombre de données précédents et suivant la $i^{ème}$ donnée dans le segment de données.

4. Appareil selon la revendication 3, caractérisé en outre en ce que le circuit d'analyse comprend des premiers moyens (32, 35, 38) pour produire, pour chaque donnée reçue, une suite de valeurs correspondant aux différences entre des paires consécutives de données dans le segment $(R_{j+1}-R_j)$; des seconds moyens (46) pour fournir le carré de chaque différence $(R_{j+1}-R_j)^2$; des troisièmes moyens (48, 49, 50) pour additionner les valeurs élevées au carré $(R_{j+1}-R_j)^2$; et des quatrièmes moyens (61, 62) pour fournir, à partir de la valeur $R_i$ de la $i^{ème}$ donnée du segment de données et des valeurs emmagasinées $K_1$ et $K_2$, les produits $R_i^2 K_1$ et $R_i^2 K_2$.

5. Appareil selon la revendication 4, caractérisé en outre en ce que le circuit de comparaison comprend des premiers moyens pour comparer la valeur du produit $R_i^2 K_1$ et la somme des valeurs élevées au carré $(R_{j+1}-R_j)^2$ et pour fournir une première sortie binaire indiquant laquelle de ces valeurs est la plus élevée; des seconds moyens pour comparer la valeur du produit $R_i^2 K_2$ et la somme des valeurs élevées au carré $\Sigma(R_{j+1}-R_j)^2$ et pour fournir une seconde sortie binaire indiquant laquelle de ces valeurs est la plus élevée; et des circuits logiques pour combiner les première et seconde sorties binaires de façon à fournir le signal de sortie indiquant le mode de fonctionnement requis.

6. Appareil selon la revendication 5, caractérisé en outre en ce que le circuit de commande comprend des moyens (70 à 76), permettant, en réponse à la sortie du circuit logique, de déterminer à quel moment un changement de mode de fonctionnement est nécessaire et quand aucun changement n'est nécessaire, et de fournir des signaux de changement de mode de fonctionnement pour initialiser un changement de mode le cas échéant.

7. Procédé pour établir un mode de fonctionnement optimum pour imprimer des copies de documents de différents types ou de formats déterminés par sélection d'un algorithme de détermination de seuil, à partir de plusieurs algorithmes, qui convient le mieux à chaque partie balayée du document, ledit procédé consistant notamment à balayer un document, à produire plusieurs signaux correspondant à un élément d'image et indiquant la réflectance de différents segments du document balayé, et à fournir pour chaque segment un signal de sortie qui est fonction de la vitesse de modification de la réflectance du document au niveau de ce segment, ledit procédé étant caractérisé en ce qu'il consiste notamment à comparer la valeur dudit signal avec deux valeurs prédéterminées différentes, dont l'une est supérieure à l'autre, afin de déterminer si la valeur du signal est inférieure à la valeur inférieure prédéterminée, dans la gamme comprise entre les deux valeurs prédéterminées, ou supérieure à la valeur prédéterminée la plus élevée, et à utiliser le résultat de cette comparaison pour sélectionner l'algorithme de détermination de seuil le plus convenable qui devra être utilisé pour imprimer des copies de la partie du document alors balayé si la valeur du signal est supérieure à la valeur prédéterminée la plus faible ou, si cette valeur est inférieure à la valeur prédéterminée la plus faible, pour conserver tel quel l'algorithme de détermination de seuil actuel.

8. Procédé selon la revendication 7, caractérisé en outre en ce qu'un premier algorithme de détermination de seuil est un algorithme de détermination de seuil d'un niveau de blanc et de noir, et en ce qu'un second algorithme de détermination de seuil est un algorithme de détermination de seuil de niveaux de gris.

**Patentansprüche**

1. Reprographie-Apparat für die Reproduktion eines Originals, das durch einen seriellen Strang digitaler Daten dargestellt wird, wobei jede Dateneinheit einen Wert hat, der eine Oberflächencharakterisierung (z. B. Reflexionswert) desjenigen elementaren Bereichs des Originals entspricht, das durch die Dateneinheit wiedergegeben wird, wobei der Apparat in der Lage ist, in mehr als einem Modus zu arbeiten, um Kopien verschiedener oder gemischter Natur (beispielsweise kontinuierliche Tönung, Halbtönung, Graupegel, oder gedruckte Originale) oder Teile davon herzustellen, enthaltend einen Schaltkreis für die Analyse der Segmente des Datenstrangs, um eine Signal herzustellen, abhängig von der Rate des Wechsels der Oberflächencharakteristik über dem Teil des Originals, das durch das Datensegment repräsentiert wird, dadurch gekennzeichnet, daß eine Vergleichsschaltung (58, 59) in dem Apparat enthalten ist, für den Vergleich des Signals, das von der Rate des Wechsels abhängig ist, mit einem ersten und einem zweiten Referenzsignal, die einem zu niedrigen Wert $K_1$ für das Rate-des-Wechsels abhängigen Signals entspricht unter dem kein Wechsel der Betriebsweise erforderlich ist und mit einem höheren Wert $K_2$ oberhalb dessen die Betriebsweise in einem ersten Betriebsmodus erforderlich ist, wobei eine zweite Betriebsweise erforderlich ist für solche Werte des Rate-des-Wechsels abhängigen Signals zwischen dem niedrigen und dem höheren Wert, und Steuerschaltkreise (15, 17), die auf das Abstandssignal des Vergleichsschaltkreises ansprechen, um Steuersignale für die Steuerung der Betriebsweise des Gerätes vorzusehen.

2. Apparat gemäß Anspruch 1, dadurch gekennzeichnet, daß der Analyseschaltkreis ein Rate-des-Wechsels abhängiges Signal $F_i$ entsprechend der Beziehung

$$F_i = \sum_{j=1-a}^{j=i+b} (R_{j+1}-R_j) \cdot \frac{1}{R_i}$$

folgt, wobei $R_i$, $R_j$ und $R_{j+1}$ die Dateneinheiten für die i-ten, j-ten und (j+1)-ten Elementbereiche sind und a und b Konstanten darstellen, die die Anzahl der Dateneinheiten vor und nach dem i-ten Datenelement in dem Datensegment wiedergeben.

3. Apparat gemäß Anspruch 1, dadurch gekennzeichnet, daß der Analyseschaltkreis ein Rate-des-Wechsels abhängigen Signals $F_i$ entsprechend der Gleichung

$$F_i = \sum_{j=i-a}^{j=i+b} (R_{j+1}-R_j)^2 \cdot \frac{1}{R_i^2}$$

erzeugt, wobei $R_i$, $R_j$ und $R_{j+1}$ die Dateneinheiten für die i-ten, j-ten und (j+1)-ten Elementbereiche sind und a und b die Konstanten sind, die die Anzahl der Datenelemente vor und nach dem i-ten Datenelement in dem Datensegment wiedergeben.

4. Apparat entsprechend Anspruch 3, dadurch gekennzeichnet, daß der Analyseschaltkreis erste Mittel (32, 35, 38) enthält für die Erzeugung von, aufgrund des erhaltenen Datensegments, einer Sequenz von Differenzwerten, die den Differenzen zwischen aufeinanderfolgenden Paaren von Datenelementen in dem Segment $(R_{j+1}-R_j)$ entsprechen; zweite Mittel (46) für die Abgabe des Quadrats jedes Differenzwertes $(R_{j+1}-R_j)^2$; dritte Mittel (48, 49, 50) für das Aufsummieren der quadrierten Werte $\Sigma(R_{j+1}-R_j)^2$ und vierte Mittel (61, 62) für die Erzeugung der Produktwerte $R_i^2 K_1$ und $R_i^2 K_2$ aus dem Wert $R_i$ des i-ten Datenelements des Datensegments und den gespeicherten Werten $K_1$ und $K_2$.

5. Apparat gemäß Anspruch 4, bei dem der Vergleichsschaltkreis erste Mittel enthält für den Vergleich des Produktwertes $R_i^2 K_1$ und der Summe der quadrierten Werte $(R_{j+1}-R_j)^2$ und für die Abgabe eines ersten binären Ausganges, der anzeigt welcher der Werte größer ist; zweite Mittel für den Vergleich des Produktwertes $R_i^2 K_2$ und der Summe der quadrierten Werte $\Sigma(R_{j+1}-R_j)^2$ und Vorsehung eines zweiten binären Ausgangswertes, der anzeigt welcher größer ist; und einen logischen Schaltkreis für die logische Verknüpfung des ersten und zweiten binären Ausgangswertes, um ein Ausgangssignal abzugeben, das anzeigt, welche Betriebsweise nötig ist.

6. Apparat gemäß Anspruch 5, dadurch gekennzeichnet, daß die Steuerschaltung Mittel (70—76) enthält, die auf das Ausgangssignal der logischen Schaltung ansprechen, um zu bestimmen ob sowohl ein Wechsel der Betriebsweise erforderlich ist als auch ob kein Wechsel erforderlich ist, und für die Abgabe der Signale zum Wechsel des Modus, um diesen Wechsel des Modus bei vorliegender Notwendigkeit zu initiieren.

7. Verfahren für die Einrichtung einer optimalen Betriebsweise für das Drucken von Kopien verschiedener oder gemischter Natur oder von Formatdokumenten durch Selektion eines Schwellwertalgorithmuses aus einer Vielzahl von Algorithmen, der am besten geeignet ist für jedes abgetastete Teil des Dokumentes, wobei das Verfahren das Abtasten eines Dokuments und die Erzeugung einer Vielzahl von pel-(Bildelement)-Signalen, die den Reflexionswert einer Vielzahl verschiedener Segmente des abgetasteten Dokumentes wiedergeben, umfaßt und die Ableitung eines Ausgangssignals für jedes Segment, das abhängig ist von der Rate-des-Wechsels des Reflexions-wertes des Dokumentes in dem betreffenden Segment, gekennzeichnet durch den Vergleich des Wertes des Rate-des-Wechsel-Signals mit zwei verschiedenen vorherbestimmten Werten, von denen einer größer ist als der andere, um zu bestimmen ob der Signalwert geringer als der niedrigere vorherbestimmte Wert ist, im Bereich zwischen den zwei vorherbestimmten Werten liegt, oder größer als der größere vorherbestimmte Wert ist und Verwendung dieser Vorherbestimmung, um den am besten geeigneten Schwellwertalgorithmus zu selektieren, um damit Kopien desjenigen Teils des Dokumentes zu drucken, das abgetastet wurde, wenn der Signalwert größer als der niedrigere vorherbestimmte Wert ist oder wenn der Signalwert geringer als der vorherbestimmte Wert ist, den gerade vorhandenen Schwellwertalgorithmus ungewechselt beizubehalten.

8. Verfahren nach Anspruch 7, dadurch gekennzeichnet, daß ein erster Schwellwertalgorithmus ein schwarzweiß-Schwellwertalgorithmus ist und daß ein zweiter Schwellwertalgorithmus ein Graustufen-Schwellwertalgorithmus ist.

# FIG. 1

# FIG. 3

FIG. 2

DATA SOURCE

CLOCK

MULTIPLEXER

RING COUNTER

COUNTER

COMP

MULTI

ROM